# EUROPEAN PATENT APPLICATION

(11) **EP 2 511 165 A1**
(43) Date of publication of application: **17.10.2012**
(21) Application number: 10827681.7
(22) Date of filing: 01.06.2010
(51) Int. Cl.: B62M 6/50

(54) **TORQUE SENSING DEVICE ON REAR AXLE AND ELECTRIC BICYCLE**

(30) Priority: 11.12.2009 CN 200910200359
(71) Applicant: Apro Bicycles Inc. (Kunshan) Co. Ltd., Kunshan, Jiangsu 215300 (CN)
(72) Inventor: LIN, Chunshan, Jiangsu 215300 (CN)
(74) Representative: Stuttard, Garry Philip
(86) International application number: PCT/CN2010/073444
(87) International publication number: WO 2011/069358

(57) **Abstract**

The present invention discloses a rear axle type torque detection device (1) and an electrically-operated bicycle. The rear axle type torque detection device (1) is mounted to the electrically-operated bicycle. The rear axle type torque detection device (1) includes a sensor holder (10) for mounting a sensor (20) and a mounting collar (50) for mounting a magnetic element (30). The sensor holder (10) is unitarily combined with a fork end piece (2) of the electrically-operated bicycle, while the mounting collar (50) is unitarily combined with a rear axle (3) of the electrically-operated bicycle. Since the sensor holder (10) and the mounting collar (50) are coupled in a slidable manner, under the action of a pedaling force, the mounting collar (50) is forced to move together with the rear axle (3), while the sensor holder (10) and the fork end piece (2) are kept stationary, so that the displacement of the mounting collar (5) and the rear axle (3) is detected by the sensor (20) thereby activating a motor to assist manual riding. Similarly, when the pedaling force is removed, the mounting collar (50) and the rear axle (3) move together back to the original position and the displacement is removed, making the power output of the motor cut off.

## Description

### BACKGROUND OF THE INVENTION

### 1. Field of the Invention

The present invention generally relates to a torque detection device, and in particular to a rear axle type torque detection device applicable to an electrically-operated bicycle.

### 2. The Related Arts

As compared to a regular bicycle, an electrically-operated bicycle allows for easy riding and effort saving due to the assistance of electrical power. Thus, the electrically-operated bicycle gets prevailing by general consumers. An electrically-operated bicycle is generally composed of a bicycle frame, a motor, a battery, a transmission, a microcomputer controller, and a torque sensor. The motor is often mounted to a surface of an axle of a rear wheel and is powered by the battery in a power limited manner. The microcomputer controller receives a signal supplied from the torque sensor or entered by a rider to adjust the output power of the motor. The location where the torque sensor is mounted is of multiple choices of design and is often determined according the practical needs. For example, it can be mounted to a pedal, a crank arm, a chain wheel, an intermediate axle, a chain, a flywheel, a rear axle, or a hub.

An electrically-operated bicycle must be operated in compliance with specific standards and regulations in order to ensure riding safety. For example, the motor can only be allowed to output power when a rider starts rotating the pedals; and once the rider stops rotating the pedals, the power output from the motor must be cut off within a predetermined travel distance. However, practically, due to the various locations where a torque sensor may be mounted and the various modes that a torque sensor may adopt for detection, there is generally a difference in the timing when the pedaling force applied by a rider is detected.

For example, when a Hall sensor is mounted to a bicycle flywheel or is unitarily combined with the flywheel, the Hall sensor may detect the rotation of the flywheel that is transmitted from the pedals through a chain, or may detect the cease of rotation of the flywheel due to pause of pedaling. However, in such a known technique, the rotation signal of the flywheel can only be detected by the Hall sensor when permanent magnets carried by a steel magnet disk sequentially pass the Hall sensor. This makes it impossible for the Hall sensor to instantaneously sense the magnets when pedals are just trodden and the detection can only be realized when the permanent magnets are rotated to reach the Hall sensor. Thus, there is a time delay in detection for the known technique and a drawback of non-timely detection results.

Thus, it is desired to have a novel rear axle type torque detection device that overcomes the drawbacks of the existing techniques.

### SUMMARY OF THE INVENTION

An objective of the present invention is to provide a rear axle type torque detection device, which timely detects the application or removal of a pedaling to thereby timely activate or de-activate a motor so as to ensure riding safety.

Another objective of the present invention is to provide an electrically-operated bicycle, which comprises a rear axle type torque detection device for timely detecting a pedaling force that a rider applies to pedals and also timely detecting the removal of the pedaling force so as to timely activate or de-activate a motor so as to ensure riding safety.

To achieve the above objectives, the present invention adopts the following technical solution: a rear axle type torque detection device, which is characterized in that the rear axle type torque detection device comprises a sensor holder, a sensor, a mounting collar, a magnetic element, and an elastic member. The sensor holder comprises a base, a first mounting board formed at one side of the base and a second mounting board formed at an opposite side of the base, a first through hole, a second through hole, and a sensor compartment, wherein the first through hole extends through the first mounting board, the base, and the second mounting board; the second through hole is in communication with the first through hole; and the sensor compartment is formed in the second mounting board. The sensor is received in the sensor compartment of the sensor holder. The elastic member has a portion received in the second through hole of the sensor holder, and another portion of the elastic member projects into the first through hole. The mounting collar comprises a sleeve, a third fixing board formed at one end of the sleeve, and an axle mounting hole, wherein the sleeve is received in the first through hole of the sensor holder, and the sleeve is slidable in the first through hole in a direction along which the second through hole extends, so as to compress or release the elastic member; and the axle mounting hole is formed in the sleeve of the mounting collar and extends in a direction along which the first through hole extends so as to be mountable to a rear axle of an electrically-operated bicycle. The magnetic element is mounted to the third fixing board of the mounting collar so as to correspond to the sensor.

To achieve the above objectives, the present invention adopts the following technical solution: an electrically-operated bicycle, which comprises a rear axle type torque detection device mounted to a rear axle and a fork end piece. The rear axle type torque detection device comprises a sensor holder, a sensor, a mounting collar, a magnetic element, and an elastic member. The sensor holder is mounted to the fork end piece and is unitarily combined with the fork end piece. The sensor holder comprises a base, a first mounting board formed at one side of the base and a second mounting board formed at an opposite side of the base, a first through hole, a second through hole, and a sensor compartment, wherein the first through hole extends through the first mounting board, the base, and the second mounting board; the second through hole is in communication with the first through hole; and the sensor compartment is formed in the second mounting board. The sensor is received in the sensor compartment of the sensor holder. The elastic member has a portion received in the second through hole of the sensor holder, and another portion of the elastic member projects into the first through hole. The mounting collar is mounted to the rear axle and is unitarily combined with the rear axle. The mounting collar comprises a sleeve, a third fixing board formed at one end of the sleeve, and an axle mounting hole, wherein the sleeve is received in the first through hole of the sensor holder, and the sleeve is slidable in the first through hole in a direction along which the second through hole extends, so as to compress or release the elastic member; and the axle mounting hole is formed in the sleeve of the mounting collar and extends in a direction along which the first through hole extends to mount to the rear axle. The axle mounting hole is mounted to the rear axle. The magnetic element is mounted to the third fixing board of the mounting collar so as to correspond to the sensor.

Compared to the known techniques, the rear axle type torque detection device of the present invention is composed of a sensor holder for mounting a sensor and a mounting collar for mounting a magnetic element. The sensor holder is unitarily combined with a fork end piece of an electrically-operated bicycle, while the mounting collar is unitarily combined with a rear axle of the electrically-operated bicycle. Since the sensor holder and the mounting collar are coupled in a slidable manner, under the action of a pedaling force, the mounting collar is forced to move together with the rear axle, while the sensor holder and the fork end piece are kept stationary, so that the displacement of the mounting collar and the rear axle is detected by the sensor thereby activating a motor to assist manual riding. Similarly, when the pedaling force is removed, the mounting collar and the rear axle move together back to the original position and the displacement is removed, making the power output of the motor cut off.

### BRIEF DESCRIPTION OF THE DRAWINGS

The present invention will be apparent to those skilled in the art by reading the following description of preferred embodiments of the present invention and the best modes for carrying out the present invention, with reference to the attached drawings, in which:

Figure 1 is perspective view showing a rear axle type torque detection device;

Figure 2 is an exploded view showing the rear axle type torque detection device taken from one perspective;

Figure 3 is another exploded view showing the rear axle type torque detection device taken from another perspective;

Figure 4 is a view illustrating positional relationship between the rear axle type torque detection device and a fork end piece;

Figure 5 is a perspective view showing the rear axle type torque detection device mounted to the fork end piece;

Figure 6 is a perspective view showing the rear axle type torque detection device mounted to the fork end piece as being observed from a different perspective;

Figure 7 is a view illustrating positional relationship among the rear axle type torque detection device, the fork end piece, and the rear axle of an electrically-operated bicycle; and

Figure 8 is schematic view illustrating the relationship between force applied to and displacement induced in the rear axle of the electrically-operated bicycle.

### DETAILED DESCRIPTION OF PREFERRED EMBODIMENTS

A description of embodiments of the present invention will be given with reference to the attached drawings for illustrative explanation of specific embodiments that practice the present invention. All direction related terminologies used in the present invention, such as "top", "bottom", "front", "rear", "left", "right', and "sides", are referred to what shown in the drawings. These direction related terminologies are provided for the illustration and understanding of the present invention, not to limit the scope of the present invention. In the embodiments described hereinafter, the same references refer to the same components/parts through all the drawings.

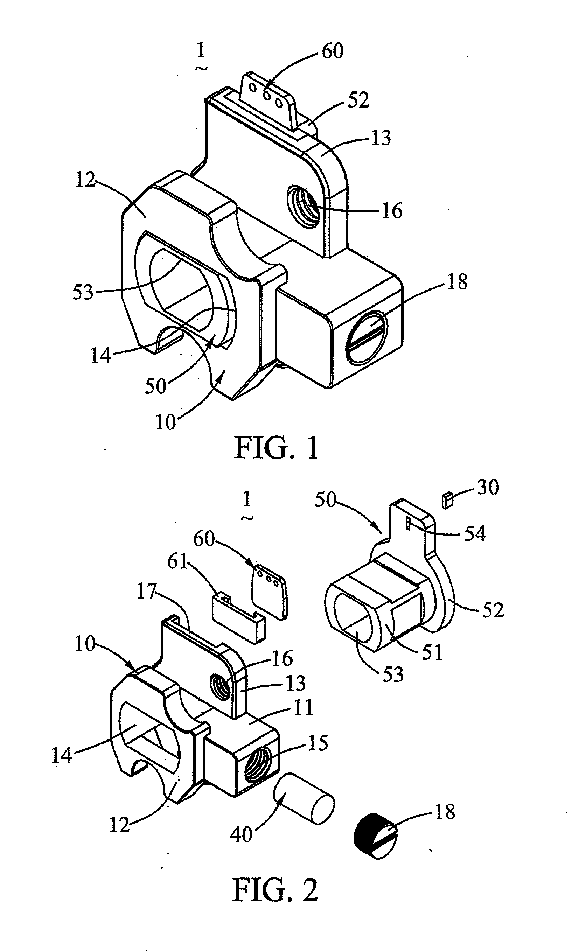

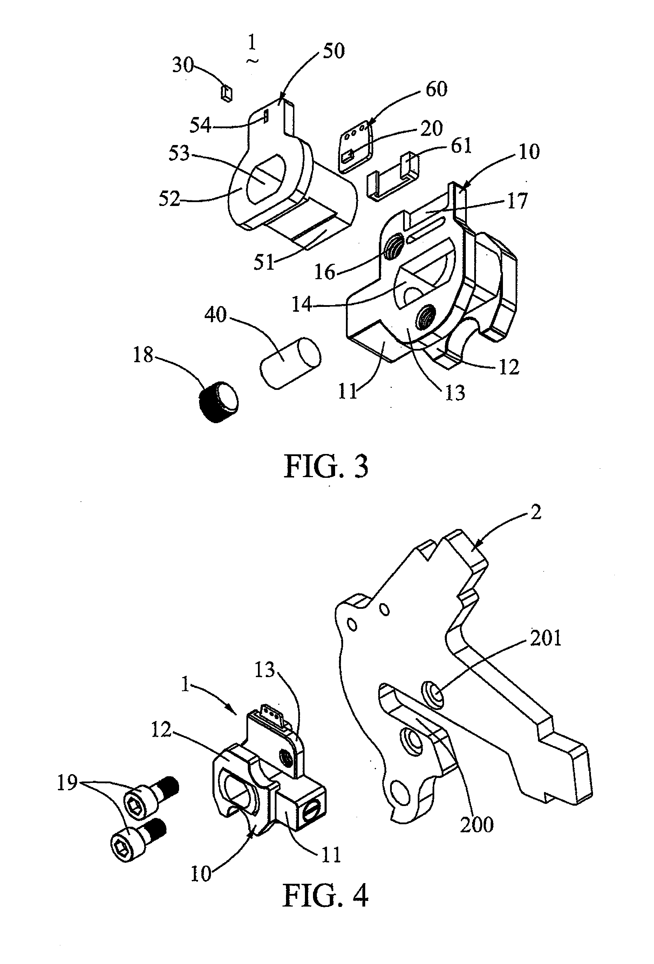

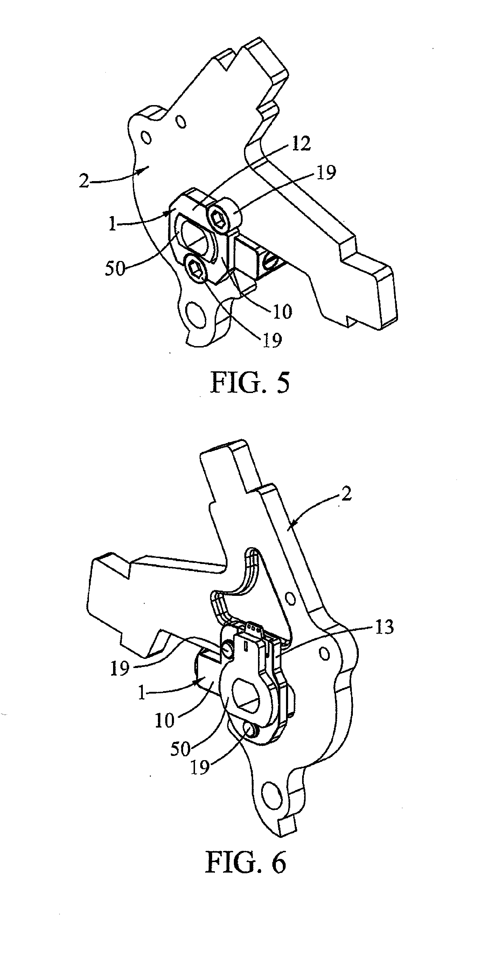

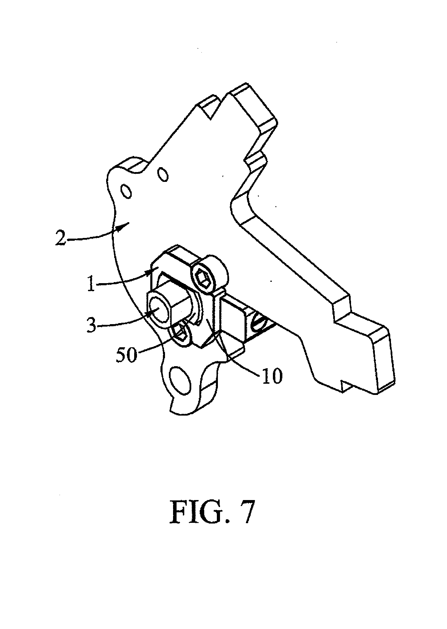

Reference is now made to Figure 1, which shows a perspective view of a rear axle type torque detection device 1; Figure 2, which shows an exploded view of the rear axle type torque detection device 1 taken from one perspective; Figure 3, which shows another exploded view of the rear axle type torque detection device 1 taken from another perspective; Figure 4, which is a view illustrating positional relationship between the rear axle type torque detection device 1 and a fork end piece 2; Figure 5, which is a perspective view showing the rear axle type torque detection device 1 mounted to the fork end piece 2; Figure 6, which is a perspective view showing the rear axle type torque detection device 1 mounted to the fork end piece 2 as being observed from a different perspective; and Figure 7, which is a view illustrating positional relationship among the rear axle type torque detection device 1, the fork end piece 2, and a rear axle 3.

Referring to Figures 1-3 and 5-7, the rear axle type torque detection device 1 according to an embodiment of the present invention comprises a sensor holder 10, a sensor 20 (see Figure 3), a magnetic element 30, an elastic member 40, and a mounting collar 50, wherein the sensor holder 10 is mountable to the fork end piece 2 (see Figure 5) of an electrically-operated bicycle and the sensor holder 10 is unitarily combined to a bicycle frame (not shown) of the electrically-operated bicycle through the fork end piece 2; the sensor 20 is mounted to the sensor holder 10 to detect displacement; the mounting collar 50 is mounted to the rear axle 3 (see Figure 7) of the electrically-operated bicycle and the mounting collar 50 is mounted, in a movable manner, to the sensor holder 10; the magnetic element 30 is mounted to the mounting collar 50 and corresponds to the sensor 30 of the sensor holder 10; and the elastic member 40 is arranged between the sensor holder 10 and the mounting collar 50. When a rider rides an electrically-operated bicycle that adopts the rear axle type torque detection device 1, a pedaling force induces a pulling force on a chain through the rotation of a chain wheel of the electrically-operated bicycle. Such a pulling force of the chain applies a frontward force on the rear axle 3 of a rear flywheel of the electrically-operated bicycle, so as to cause the mounting collar 50 that is mounted to the rear axle 3 to displace frontward with respect to the sensor holder 10 mounted to the fork end piece 2 and the elastic member 40 is compressed. Under this condition, the sensor 20 mounted on the sensor holder 10 detects the displacement that the magnetic element 30 mounted on the mounting collar 50 undergoes with respect to the sensor 20 and generates a voltage. The voltage is applied to a modularized processor of the electrically-operated bicycle. A controller that is connected to the modularized processor then supplies an electronic signal to control the electrical current flowing through a motor, so as to realize activation, sustenance, adjustment, cut-off of power output from the motor. In one embodiment, the motor has an output power of 250W.

Structural Details of the rear axle type torque detection device 1 for an electrically-operated bicycle will be described as follows.

Referring to Figures 1, 2, and 3, the sensor holder 10 of the rear axle type torque detection device 1 comprises a base 11, a first mounting board 12 formed at one side of the base 11 and a second mounting board 13 formed at an opposite side of the base 11, a first through hole 14, a second through hole 15, at least one fixing hole 16, and a sensor compartment 17, wherein the first through hole 14 extends through the first mounting board 12, the base 11, and the second mounting board 13; the second through hole 15 communicates the first through hole 14; the sensor compartment 17 is formed in the second mounting board 13. In one embodiment, the first mounting board 12 is substantially parallel to the second mounting board 13, the first mounting board 12 is located on the left side of the base 11, and the second mounting board 13 is located on the right side of the base 11. The first through hole 14 extends through both the left and right side surfaces of the sensor holder 10. The second through hole 15 extends from a front surface of the sensor holder 10 to the first through hole 14, so as to form communication with the first through hole 14 in a substantially perpendicular fashion. The fixing hole 16 is formed in the second mounting board 13, and in the instant embodiment, two such fixing holes 16 are formed in the second mounting board 13. The sensor compartment 17 is formed in the outer side (namely the right side) of the second mounting board 13 and the sensor compartment 17 is of a semi-open structure. In one embodiment, the second through hole 15 is a threaded hole that receives a locking bolt 18 screwed therein.

Referring to Figures 1, 2, and 3, the sensor 20 of the rear axle type torque detection device 1 is received and fixed in the sensor compartment 17 of the sensor holder 10. In one embodiment, the sensor 20 is a Hall sensor and the sensor 20 is mounted to a sensor module 60. The sensor module 60 is first positioned in the sensor compartment 17, and then a retention seat 61 is used to securely retain the sensor module 60 in the sensor compartment 17.

Referring to Figures 2 and 3, the elastic member 40 of the rear axle type torque detection device 1 is mounted inside the sensor holder 10, wherein a portion of the elastic member 40 is received in the second through hole 15 of the sensor holder 10, while the remaining portion of the elastic member 40 projects into the first through hole 14. Further, the locking bolt 18 is screwed into the second through hole 15, whereby the locking bolt 18 engages the elastic member 40 located in the second through hole 15 to control the distance that the elastic member 40 projects into the first through hole 14 to thereby control a range of displacement that the mounting collar 50 is allowed to move within the first through hole 14 and also to prevent the elastic member 40 from separating from the second through hole 15. In one embodiment, the elastic member 40 is a cylindrical polyurethane spring, which has a diameter substantially corresponding to a diameter of the second through hole 15.

Referring to Figures 1, 2, and 3, the mounting collar 50 of the rear axle type torque detection device 1 is coupled to the sensor holder 10 in a slidable manner. The mounting collar 50 comprises a sleeve 51 and a third fixing board 52 formed at one end of the sleeve 51, wherein the sleeve 51 is received in the first through hole 14 of the sensor holder 10 and the sleeve 51 is slidable in the first through hole 14 in a direction along which the second through hole 15 extends so as to compress or release the elastic member 40. Particularly, the sleeve 51 has an outside configuration that is substantially corresponding to the first through hole 14, but is smaller in size than the first through hole 14, whereby the sleeve 51 is receivable into the first through hole 14 of the sensor holder 10. In one embodiment, the sleeve 51 has top and bottom surfaces that form tight and slidable engagement with top and bottom walls of the first through hole 14, and the sleeve 51 has front and rear surfaces between which a distance is substantially smaller than a distance between front and rear walls of the first through hole 14, whereby a frontward-rearward movable space for the sleeve 51 is formed within the first through hole 14 to allow the sleeve 51 to frontward/rearward move within the first through hole 14 in the direction along which the second through hole 15 extends. The mounting collar 50 further forms an axle mounting hole 53, and the axle mounting hole 53 extends in a direction along which the first through hole 14 extends. In one embodiment, the axle mounting hole 53 extends through both left and right side surfaces of the mounting collar 50. In other words, the axle mounting hole 53 extends through the sleeve 51 and the third fixing board 52. The axle mounting hole 53 functions to receive a rear axle 3 of the electrically-operated bicycle (as shown in Figure 7) therein, and is coupled to the rear axle 3 of which a preferred way of coupling is interference fitting, so that the mounting collar 50 is connected to the rear axle 3 and integrated with the rear axle 3 as a unitary arrangement. The third fixing board 52 is parallel to the first mounting board 12 and the second mounting board 13 of the sensor holder 10. When the sleeve 51 is received in the first through hole 14, the third fixing board 52 is positioned against the second mounting board 13. The third fixing board 52 forms a cavity 54, and the cavity 54 is set at a location corresponding to the sensor compartment 17 of the sensor holder 10 in order to receive the magnetic element 30 therein.

Referring to Figures 2 and 3, the magnetic element 30 is set in the cavity 54 of the third fixing board 52 so as to correspond to the sensor 20.

Referring to Figures 4-6, the rear axle type torque detection device 1 is mounted to the fork end piece 2. The base 11 of the sensor holder 10 is received in a slot 200 formed in the fork end piece 2, and the first mounting board 12 and the second mounting board 13 of the sensor holder 10 are respectively located on two sides of the fork end piece 2. With two locking bolts 19 set through the fixing holes 16 of the second mounting board 13 and also extending through locking holes 201 of the fork end piece 2, the sensor holder 10 is securely mounted to the fork end piece 2. Also referring to Figure 7, the mounting collar 50 of the rear axle type torque detection device 1 is coupled to the rear axle 3, whereby when a bicycle riders applies a pedaling force, the mounting collar 50 that carries the magnetic element 30 thereon and the rear axle 3 of the electrically-operated bicycle are forced to move frontward together, making the elastic member 40 compressed and the distance between the magnetic element 30 and the sensor 20 reduced. The sensor 20 thus detects the displacement of the rear axle 3 so as to activates and adjust the motor to assist manual riding. Similarly, when the rider stops pedaling, the rear axle 3 of the electrically-operated bicycle is no longer acted upon by the frontward force so that the elastic member 40 automatically springs back, thereby moving the mounting collar 50 that carries the magnetic element 30 thereon and the rear axle 3 back to the original position. The displacement is thus removed and the motor is shut down.

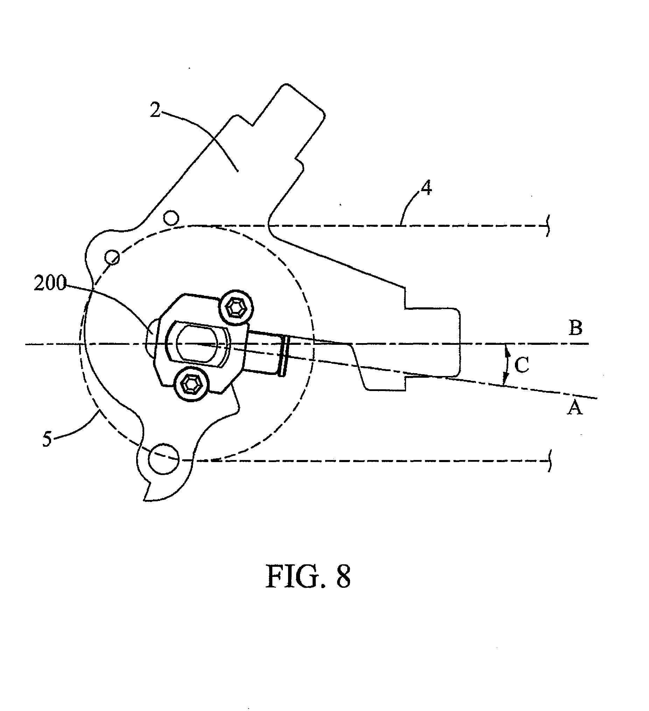

In one embodiment, as shown in Figure 8, the slot 200 of the fork end piece 2 of the electrically-operated bicycle defines a slotting direction A that forms an angle C with respect to a force application direction B along which the chain 4 applies a force to the rear wheel 5 and the rear axle 3. The angle C ranges from 6 degrees to 13 degrees and the allowable moving distance that the rear axle 3 is forced by the chain 4 to move in the slotting direction A of the slot 200 is between 0 to 0.8 millimeters. The angle C that is set between 6 to 13 degrees is the best angle that ensures parallel displacement due to the action of the force applied by the chain and this is a feasible angular range for practical designs.

The displacement between the sensor 20 and the magnetic element 30 is caused by the pulling force applied by the chain, and different displacements cause the sensor 20 to generate corresponding voltages. Different levels of the voltages cause the motor to generate different output powers. In one embodiment of practical application, through the arrangement of a modularized processor, the electrically-operated bicycle may be set at three power positions. For example, when set at the third power position, the motor supplies an output power that is maximum, in which condition the rider only needs to successive apply slighting pedaling to bicycle pedals with left and right feet for effort-less riding with the assistance by the motor. This power position best suit for uphill travel or the rider may take the third power position when feeling physically exhausted. When set at the second power position, the output power of the motor is less, and under such a condition, a great pedaling force is required under the assistance provided by the motor. For the first power position, the output power of the motor is least, so that riding is laborious. This power position is an option for riding on level grounds.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A rear axle type torque detection device (1), **characterized in that** the rear axle type torque detection device (1) comprises a sensor holder (10), a sensor (20), a mounting collar (50), a magnetic element (30), and an elastic member (40), wherein
the sensor holder (10) comprises a base (11), a first mounting board (12) formed at one side of the base (11) and a second mounting board (13) formed at an opposite side of the base (11), a first through hole (14), a second through hole (15), and a sensor compartment (17), wherein the first through hole (14) extends through the first mounting board (12), the base (11), and the second mounting board (13); the second through hole (15) is in communication with the first through hole (14); and the sensor compartment (17) is formed in the second mounting board (13);
the sensor (20) is received in the sensor compartment (17) of the sensor holder (10);
the elastic member (40) has a portion received in the second through hole (15) of the sensor holder (10), and another portion of the elastic member (40) projects into the first through hole (14);
the mounting collar (50) is coupled to the sensor holder (10) in a slidable manner and the mounting collar (50) comprises a sleeve (51), a third fixing board (52) formed at one end of the sleeve (51), and an axle mounting hole (53), wherein the sleeve (51) is received in the first through hole (14) of the sensor holder (10), and the sleeve (51) is slidable in the first through hole (14) in a direction along which the second through hole (15) extends, so as to compress or release the elastic member (40); and the axle mounting hole (53) is formed in the sleeve (51) of the mounting collar (50) and extends in a direction along which the first through hole (14) extends so as to be mountable to a rear axle (3) of an electrically-operated bicycle; and
the magnetic element (30) is mounted to the third fixing board (52) of the mounting collar (50) so as to correspond to the sensor (20).

2. The rear axle type torque detection device as claimed in Claim 1, **characterized in that** the first mounting board (12) and the second mounting board (13) of the sensor holder (10) are substantially parallel, and the second mounting board (13) forms at least one fixing hole.

3. The rear axle type torque detection device as claimed in Claim 2, **characterized in that** the first mounting board (12) is located on a left side of the base (11), the second mounting board (13) is located on a right side of the base (11), and the second through hole (15) extends from a front surface of the base (11) to the first through hole (14), so that the second through hole is set in communication with the first through hole in a substantially perpendicular fashion.

4. The rear axle type torque detection device as claimed in Claim **1, characterized in that** the sensor compartment (17) of the sensor holder (10) is of a semi-open structure and the sensor (20) is mounted to a sensor module (60), the sensor module (60) being securely retained in the sensor compartment (17) through a retention seat (61).

5. The rear axle type torque detection device as claimed in Claim **1, characterized in that** the second through hole (15) of the sensor holder (10) receives a locking bolt (18) set therein to engage the elastic member (40) located in the second through hole (15).

6. The rear axle type torque detection device as claimed in Claim **1, characterized in that** the sleeve (51) has top and bottom surfaces that respectively form slidable engagement with top and bottom walls of the first through hole (14), and the sleeve (51) has front and rear surfaces between which a distance is substantially smaller than a distance between front and rear walls of the first through hole (14), so as to allow the sleeve (51) to move frontward/rearward within the first through hole (14) in the direction along which the second through hole (15) extends.

7. The rear axle type torque detection device as claimed in Claim **6, characterized in that** the third fixing board (52) of the mounting collar (50) is substantially parallel to the first mounting board (12) and the second mounting board (13) of the sensor holder (10) and when the sleeve (51) is received in the first through hole (14), the third fixing board (52) is positioned against the second mounting board (13).

8. The rear axle type torque detection device as claimed in Claim **7, characterized in that** the third fixing board forms a cavity (54) and the cavity (54) is set at a location corresponding to the sensor compartment (17) of the sensor holder (10); the magnetic element (30) is fixed in the cavity (54).

9. An electrically-operated bicycle, comprising a rear axle type torque detection device (1) mounted to a rear axle (3) and a fork end piece (2), **characterized in that** the rear axle type torque detection device (1) comprises a sensor holder (10), a sensor (20), a mounting collar (50), a magnetic element (30), and an elastic member (40), wherein
the sensor holder (10) is mounted to the fork end piece (2) and is unitarily combined with the fork end piece (2), the sensor holder (10) comprises a base (11), a first mounting board (12) formed at one side of the base (11) and a second mounting board (13) formed at an opposite side of the base (11), a first through hole (14), a second through hole (15), and a sensor compartment (17), wherein the first through hole (14) extends through the first mounting board (12), the base (11), and the second mounting board (13); the second through hole (15) is in communication with the first through hole (14); and the sensor compartment (17) is formed in the second mounting board (13);
the sensor (20) is received in the sensor compartment (17) of the sensor holder (10);
the elastic member (40) has a portion received in the second through hole (15) of the sensor holder (10), and another portion of the elastic member (40) projects into the first through hole (14);
the mounting collar (50) is mounted to the rear axle (3) and is unitarily combined with the rear axle (3), the mounting collar (50) comprises a sleeve (51), a third fixing board (52) formed at one end of the sleeve (51), and an axle mounting hole (53), wherein the sleeve (51) is received in the first through hole (14) of the sensor holder (10), and the sleeve (51) is slidable in the first through hole (14) in a direction along which the second through hole (15) extends, so as to compress or release the elastic member (40); and the axle mounting hole (53) is formed in the sleeve (51) of the mounting collar (50) and extends in a direction along which the first through hole (14) extends to mount to the rear axle (3), the axle mounting hole (53) being mounted to the rear axle (3); and
the magnetic element (30) is mounted to the third fixing board (52) of the mounting collar (50) so as to correspond to the sensor (20).

10. The electrically-operated bicycle as claimed in Claim **9, characterized in that** the electrically-operated bicycle further comprises locking bolts (19), the sensor holder (10) being fixed to the fork end piece (2) by the locking bolts (19), an additional locking bolt (18) being received in the second through hole (15) of the sensor holder (10) to engage the elastic member (40) received in the second through hole (15).
